# EUROPEAN PATENT SPECIFICATION

(11) **EP 2 085 600 B1**
(45) Date of publication and mention of the grant of the patent: **27.06.2012**
(21) Application number: 09250179.0
(22) Date of filing: 23.01.2009
(51) Int. Cl.: F02K 3/115, F02C 7/14, F02C 7/18, F02C 7/224

(54) **Thermal management system integrated pylon**
Pylon mit integriertem Wärmeregelungssystem
Pylône avec système de gestion thermique intégré

(30) Priority: 28.01.2008 US 20728; 25.01.2008 US 19837
(43) Date of publication of application: 05.08.2009
(73) Proprietor: United Technologies Corporation, Hartford, CT 06101 (US)
(72) Inventor: Suciu, Gabriel L., Glastonbury, CT 06033 (US); Dye, Christopher M., South Windsor, CT 06074 (US); Merry, Brian D., Andover, CT 06232 (US)
(74) Representative: Leckey, David Herbert

(56) References cited:
- EP-A2- 0 469 825
- EP-A2- 1 882 824
- GB-A- 2 437 295
- US-A- 5 203 163
- US-A1- 2007 245 739
- US-A1- 2008 028 763

## Description

### BACKGROUND OF THE INVENTION

The present invention relates to Thermal Management Systems (TMS), and more particularly to a TMS within a bifurcation area of a gas turbine engine.

Thermal Management Systems (TMS) include heat exchangers and associated equipment which exchange gas turbine engine heat with an airflow or fuel flow. The gas turbine engine architecture typically dictates TMS heat exchanger placement. Conventional TMS heat exchanger locations may partially interrupt the thrust airflow through the engine.

One conventional TMS heat exchanger placement is typically within a core cowl area and axially deep within a fan cowl. The heat exchanger airflow is ducted inward toward the engine centreline through the heat exchanger, then ducted outward to merge with the bypass stream. Such ducts may be relatively long and serpentine to guide the heat exchanger airflow away from, then back into the bypass flow. Furthermore, this configuration may introduce mixing losses, which may detract from the engine efficiency.

A further heat exchanger arrangement is known from EP 0469825, which discloses a thermal management system for a gas turbine engine comprising a bifurcation area and a heat exchanger mounted within said bifurcation area in communication with a bypass flow from the gas turbine engine.

### SUMMARY OF THE INVENTION

A thermal management system, a nacelle assembly and a corresponding method for a gas turbine engine according to an aspect of the present invention includes a first heat exchanger and a second heat exchanger, mounted within a common plenum defined by the bifurcation area to share a common inlet as set forth in claims 1, 10 and 12.

### BRIEF DESCRIPTION OF THE DRAWINGS

The various features and advantages of this invention will become apparent to those skilled in the art from the following detailed description of the currently disclosed embodiment. The drawings that accompany the detailed description can be briefly described as follows:
Figure 1A is a general sectional view through a gas turbine engine along the engine longitudinal axis;
Figure 1B is a general sectional view through a gas turbine engine along the engine longitudinal axis illustrating an engine static structure case arrangement on the lower half thereof;
Figure 2A is a side partial sectional view of a thermal management system;
Figure 2B is a top rearward perspective view of the thermal management system of Figure 2A;
Figure 2C is a top sectional view of the thermal management system of Figure 2A;
Figure 2D is a top sectional view of the thermal management system of Figure 2A with modulated flow vanes moved toward a closed position;
Figure 3 is a side partial sectional view of a lower bifurcation area;
Figure 4A is a side partial sectional view of another thermal management system;
Figure 4B is a top sectional view of the thermal management system of Figure 3A; and
Figure 4C is a rear view of the thermal management system of Figure 3A.

### DETAILED DESCRIPTION OF THE DISCLOSED EMBODIMENT

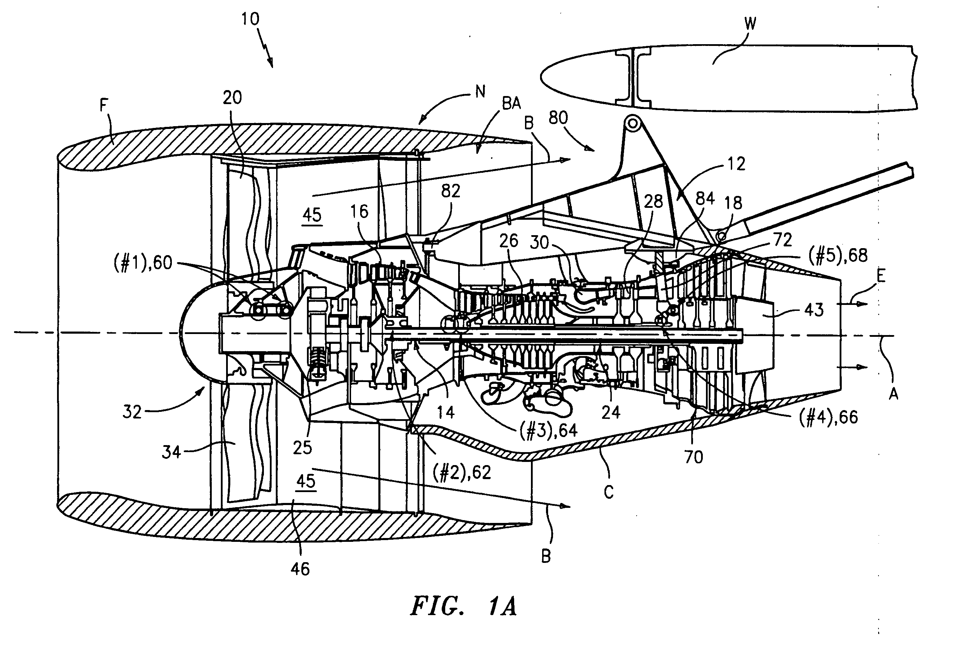

Figure 1A illustrates a general partial fragmentary schematic view of a gas turbine engine 10 suspended from an engine pylon structure 12 within an engine nacelle assembly N as is typical of an aircraft designed for subsonic operation. It should be understood that although a particular component arrangement is disclosed in the illustrated embodiment, various pylon structures 12 and nacelle assemblies N will benefit herefrom.

The engine 10 includes a core engine within a core nacelle C that houses a low spool 14 and high spool 24. The low spool 14 generally includes a low pressure compressor 16 and low pressure turbine 18. The low spool 14 drives a fan section 20 connected to the low spool 14 either directly or through a gear train 25.

The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 in the disclosed non-limiting embodiment is a high-bypass geared architecture aircraft engine where the engine 10 bypass ratio is greater than ten (10: 1), the turbofan diameter is significantly larger than that of the low pressure compressor 16, and the low pressure turbine 18 has a pressure ratio that is greater than 5:1. The gear train 25 may be an epicycle gear train such as a planetary gear system or other gear system with a gear reduction ratio of greater than 2.5:1. It should be understood, however, that the above parameters are only exemplary of one non-limiting embodiment of a geared architecture engine and that the present invention is applicable to other gas turbine engines including direct drive turbofans.

Airflow enters the fan nacelle F which at least partially surrounds the core nacelle C. The fan section 20 communicates airflow into the core nacelle C to the low pressure compressor 16. Core airflow compressed by the low pressure compressor 16 and the high pressure compressor 26 is mixed with the fuel in the combustor 30 ignited, and burned. The resultant high pressure combustor products are expanded through the high pressure turbine 28 and low pressure turbine 18. The turbines 28, 18 are rotationally coupled to the compressors 26, 16 respectively to drive the compressors 26, 16 in response to the expansion of the combustor product. The low pressure turbine 18 also drives the fan section 20 through gear train 25.

A core engine exhaust E exits the core nacelle C through a core nozzle 43 defined between the core nacelle C and a tail cone 33. A bypass flow path 45 is defined between the core nacelle C and the fan nacelle F. The engine 10 generates a high bypass flow arrangement with a bypass ratio in which approximately 80 percent of the airflow entering the fan nacelle 34 becomes bypass flow B. The bypass flow B communicates through the generally annular bypass flow path 45.

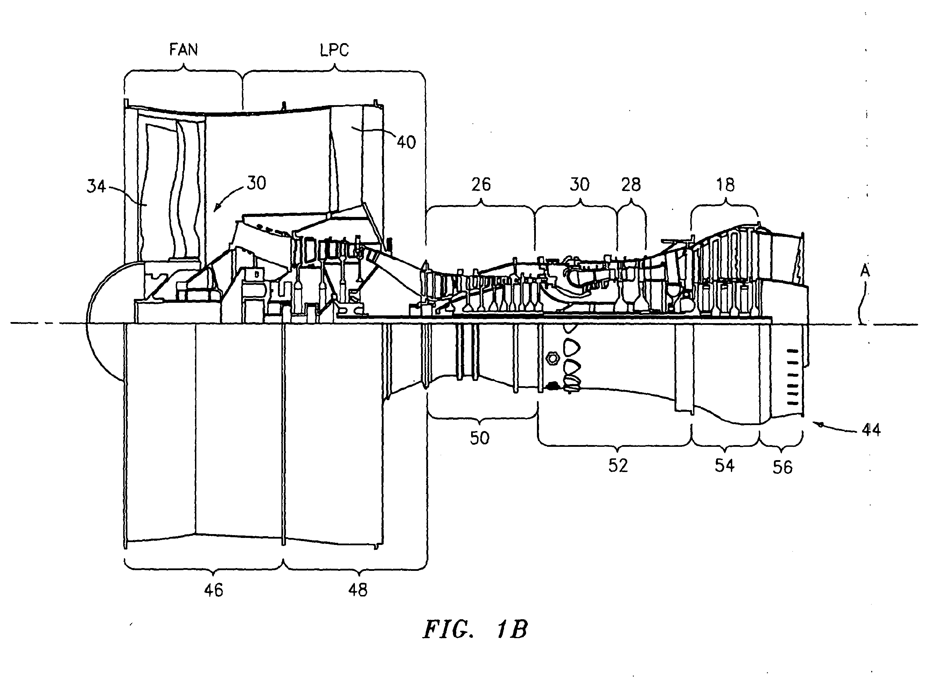

An engine static structure 44 generally has sub-structures including a case structure often referred to as the engine backbone. The engine static structure 44 generally includes a fan case 46, an intermediate case (IMC) 48, a high pressure compressor case 50, a combustor case 52, a low pressure turbine case 54, and a turbine exhaust case 56 (Figure 1 B). The fan section 20 includes a fan rotor 32 with a plurality of circumferentially spaced radially outwardly extending fan blades 34. The fan blades 34 are surrounded by the fan case 46.

The core engine case structure is secured to the fan case 46 at the IMC 48 which includes a multiple of circumferentially spaced radially extending struts 40 which radially span the core engine case structure and the fan case 46. The core nacelle 12 is at least partially supported within the fan nacelle by structure often generically referred to as Fan Exit Guide Vanes (FEGVs), upper bifurcations, lower bifurcations or such like.

The engine static structure 44 further supports a bearing system upon which the turbines 28, 18, compressors 26, 16 and fan rotor 32 rotate. A #1 fan dual bearing 60 which rotationally supports the fan rotor 32 is axially located generally within the fan case 46. The #1 fan dual bearing 60 is preloaded to react fan thrust forward and aft (in case of surge). A #2 LPC bearing 62 which rotationally supports the low spool 14 is axially located generally within the intermediate case (IMC) 48. The #2 LPC bearing 62 reacts thrust. A #3 high spool thrust bearing 64 which rotationally supports the high spool 24 and also reacts thrust. The #3 high spool bearing 64 is also axially located generally within the IMC 48 just forward of the high pressure compressor case 50. A #4 bearing 66 which rotationally supports a rear segment of the high spool 14 reacts only radial loads. The #4 bearing 66 is axially located generally within the combustor case 52 in an aft section thereof. A #5 bearing 68 rotationally supports the rear segment of the low spool 14 and reacts only radial loads. The #5 bearing 68 is axially located generally within the combustor case 52 just aft of the #4 bearing 66. It should be understood that this is an exemplary configuration and any number or combination of bearings may be utilized.

The #4 bearing 66 and the #5 bearing 68 are supported within a mid-turbine frame (MTF) structure 70 to straddle radially extending structural struts 72 which are preloaded in tension. The MTF 70 provides aft structural support within the combustor case 52 for the #4 bearing 66 and the #5 bearing 68 which rotatably support the spools 14, 24.

A dual rotor engine such as that disclosed in the illustrated non-limiting embodiment typically includes a forward frame and a rear frame that support the main rotor bearings. The intermediate case (IMC) 48 also includes the radially extending structural struts 40 which are generally radially aligned with the #2 LPC bearing 62 (Figure 1A). It should be understood that various engines with various case and frame structures will benefit herefrom.

The engine 10 is mounted to aircraft structure such as an aircraft wing W through an engine mounting configuration 80 defined by the pylon structure 12. The engine mounting configuration 80 includes a forward mount 82 and an aft mount 84. That is, the pylon structure 12 may include various braces, struts and such like which are surrounded at least in part by an aerodynamic fairing structure. The forward mount 82 is secured to the IMC 48 and the aft mount 84 is secured to the MTF 70 at the thrust case 52. The forward mount 82 and the aft mount 84 are arranged in a plane containing the axis A of the turbofan gas turbine 10. This eliminates thrust links from the intermediate case, which frees up valuable space beneath the core nacelle and minimizes IMC 48 distortion.

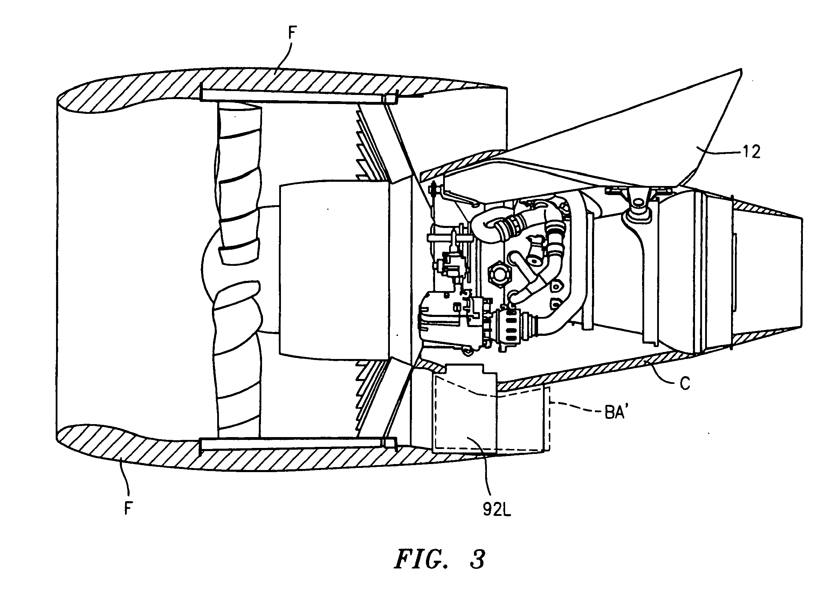

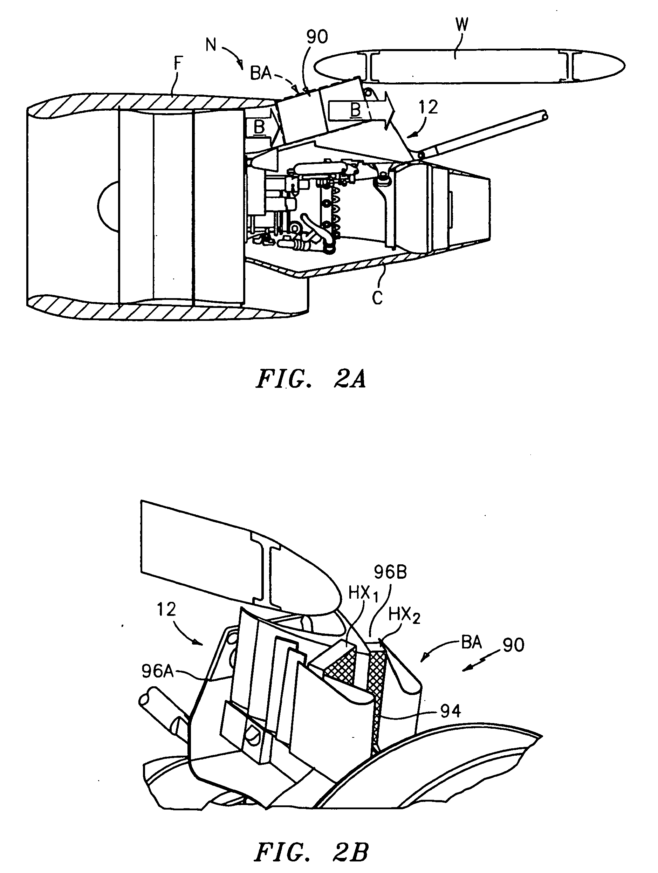

Referring to Figure 2A, a thermal management system (TMS) 90 is at least partially integrated adjacent the nacelle assembly N, the engine pylon structure 12 and the upper bifurcation (bifi) 92U. This area is generally referred to herein as a bifurcation area BA. It should be understood that the TMS 90 may be located at least partially forward of the pylon 12, at least partially within the pylon structure 12, at least partially within the upper bifurcation 92U or any combination thereof but still considered as located within the bifurcation area BA as defined herein. Alternatively, if located within a lower section of the engine such as in a lower bifurcations 92L, this area too may be considered as located within a bifurcation area BA' as defined herein (Figure 3). That is, the TMS 90 may be arranged in various axial positions such that a plane which passes through the engine centerline A and the pylon structure 12 also passes through the TMS 90.

The TMS 90 in one non-limiting embodiment, includes a first heat exchanger HX12 and a second heat exchanger HX2 (Figure 2B) in communication with the bypass flow path 45 through an inlet 94 and an exit 96. The bypass flow B is communicated from the inlet 94 adjacent a trailing edge of the fan nacelle F to exit though the exist 96 generally above the pylon structure 12 and toward the wing W such that this embodiment may be referred to as an "above pylon" engine installation. Axial and lateral space within the engine pylon structure 12 locates the heat exchangers HX1, HX2 in the bypass flow path 45 facilitate packaging of the TMS 90 and achieve cooling airflow requirements.

It should be understood that the heat exchangers HX1, HX2 may be air/fluid, fluid/fluid, or air/air heat exchangers. Air/fluid heat exchangers are typically utilized to cool engine fluids to maintain low temperatures. Fluids may be oil used to lubricate engine components such as bearings and gears, or fuel. Fluid/fluid exchangers are typically utilized to preheat engine fuel before combustion to increase cycle efficiency. Air/air heat exchangers are typically utilized to cool high-temperature engine air for use in the aircraft cabin.

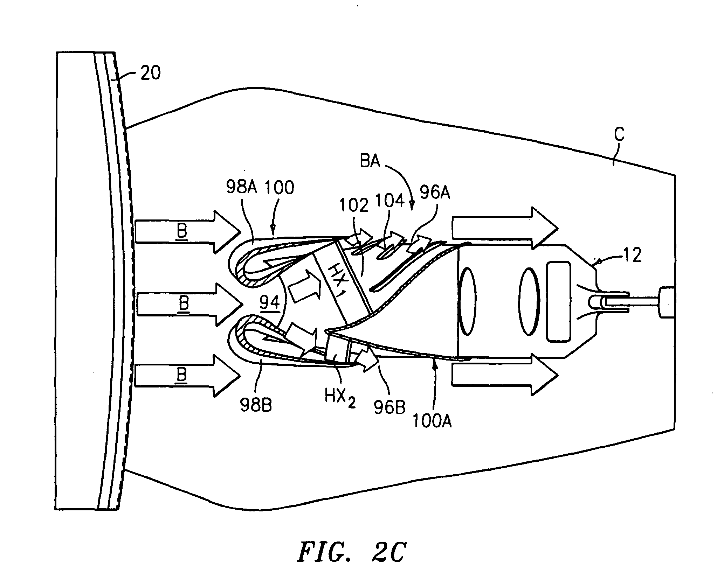

Referring to Figure 2C, a set of inlet guide vanes 98A, 98B define the inlet 94 such that the heat exchangers HX1, HX2 may be located in a common area to share the inlet 94. Inlet air may be split into the respective heat exchangers HX1, HX2 by a vane structure 100 in response to desired heat exchanger airflow requirements. The vane structure 100 includes a guide vane 100A between the heat exchangers HX1, HX2 that provides for passage of conduits, wiring harness, piping and such like between the engine 10 and the wing W.

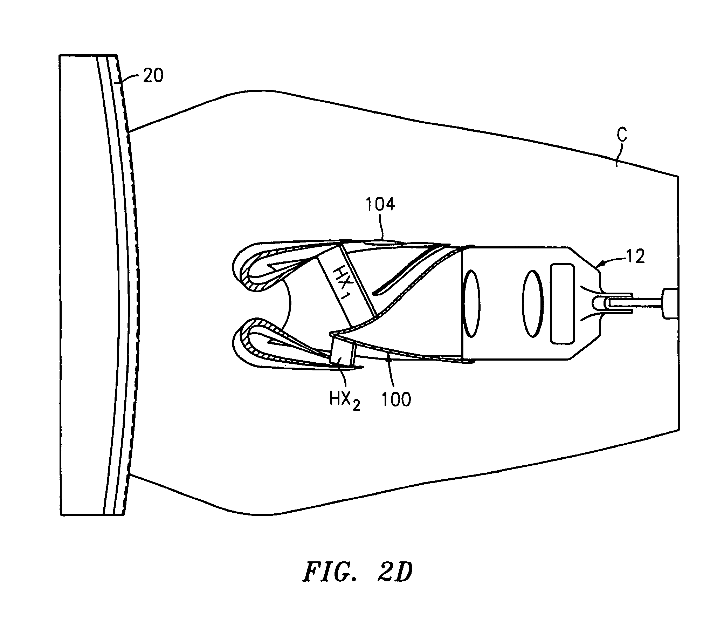

The exit 96 in this non-limiting embodiment is split to communicate exit airflow through exits 96A, 96B along both sides of the pylon structure 12. Alternatively, or in addition thereto flow vanes 102 may be provided to guide the exit airflow. Furthermore, a set of modulated flow vanes 104 may be utilized to shutter or modulate the exit airflow to provide a desired backpressure or other flow control through the heat exchangers HX1, HX2. That is, in one example, should the modulated flow vanes 104 be moved toward a closed position (Figure 2D), airflow though heat exchanger HX1 will decrease while airflow through heat exchanger HX2 will increase. It should be understood that although a particular inlet and exit arrangement is illustrated in the disclosed, non-limiting embodiment, various inlet and exit combinations which may include combinations of multiple as well as single inlet(s) and exit(s) will benefit herefrom.

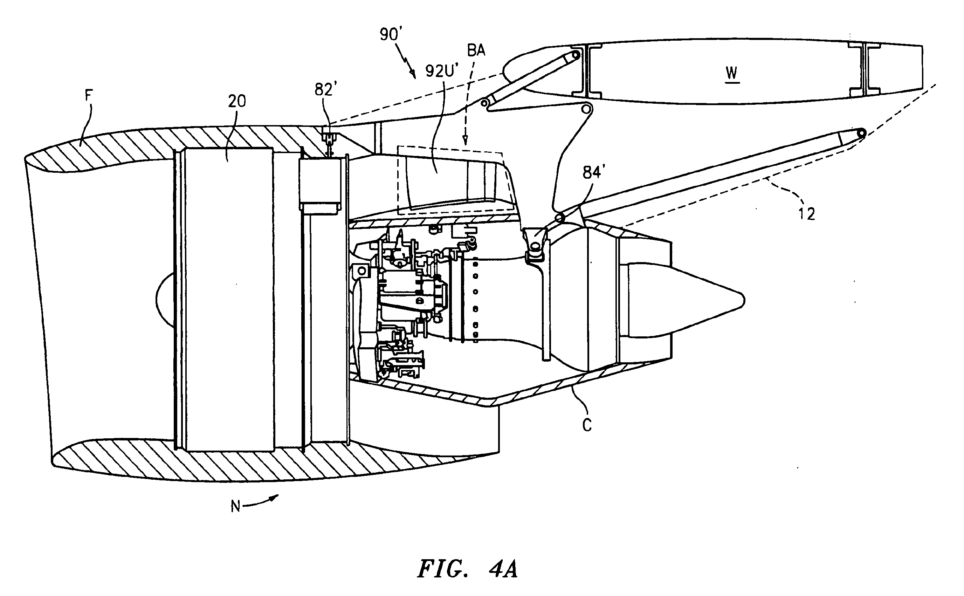

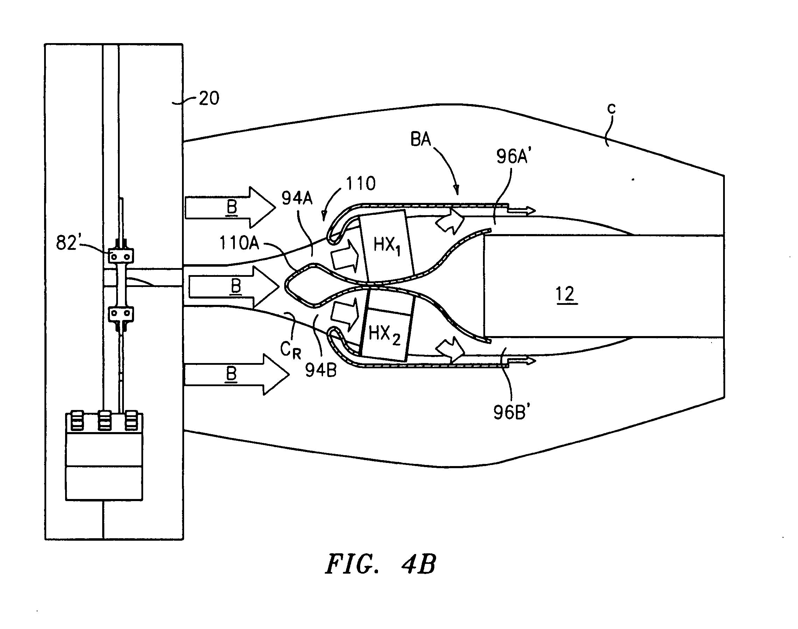

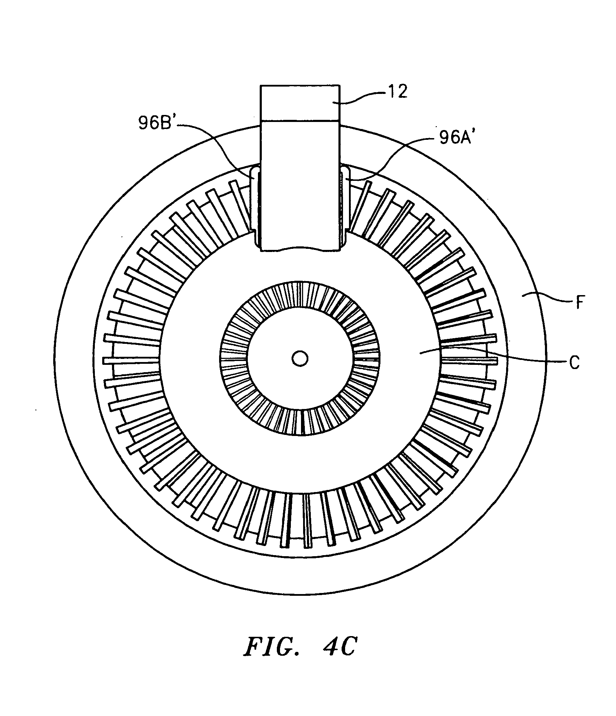

Referring to Figure 4A, another thermal management system (TMS) 90' is at least partially-integrated within the nacelle assembly N and the engine pylon structure 12 in which the forward mount 82' is mounted to the outer periphery of the fan case 20. The TMS 90' in one non-limiting embodiment, includes a first heat exchanger HX1' and a second heat exchanger HX2' (Figure 4B) in communication with the bypass flow path 45 through an inlet 94' and an exit 96' (Figure 4C). The bypass flow B is communicated from the inlet 94' to the exit 96' generally parallel to the engine axis A. This arrangement may be referred to as a "below pylon" engine installation.

Referring to Figure 4B, the TMS 90' may be at least partially recessed C_{R} into the core nacelle C. A set of inlet guide vanes 110 define the inlets 94A', 94B' such that the heat exchangers HX1', HX2' are located in separate plenums on either side of a central inlet guide vane 110A. The central inlet guide vane 110A facilitates avoidance of foreign object damage (FOD). Furthermore, the central inlet guide vane 110A provides an effective passage for conduits between the engine 10 and the wing W. The exit 96' in this non-limiting embodiment is split into exits 96A', 96B' to communicate exit airflow along both sides of the pylon structure 12 (Figure 3C).

The TMS provides reduced weight as the required TMS support structure and plumbing are minimized since the heat exchangers are placed directly in the bypass flow path to reduce the length of required ducting. The heat exchanger may also be reduced in size when located in the bypass flow path as the heat exchangers operate in a cooler environment than when placed in the core, which may be a higher temperature area due in part to the temperatures generated by the burner, turbine, and high compressor. Bypass aerodynamic efficiency is also increased as mix area outside the nacelle duct zone decreases, decreasing fan bypass area mixing losses compared to unducted heat exchanger placement. Furthermore, the overall TMS space is reduced and combined into smaller overall volume due to close-positioning in a space with a more rectangular shape.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

Although particular step sequences are shown, described, and claimed, it should be understood that steps may be performed in any order, separated or combined unless otherwise indicated and will still benefit from the present invention.

The foregoing description is exemplary rather than defined by the limitation within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A thermal management system (90;90') for a gas turbine engine (10) comprising:
a bifurcation area (BA); and
at least one heat exchanger (HX₁, HX₂) mounted within said bifurcation area (BA) in communication with a bypass flow (B) from the gas turbine engine;
**characterized in that** said at least one heat exchanger comprises a first heat exchanger (HX₁) and a second heat exchanger (HX₂), mounted within a common plenum defined by said bifurcation area (BA) to share a common inlet (94).

2. The system as recited in claim 1, wherein said bifurcation area (BA) is at least partially within, or forward of, a pylon structure (12).

3. The system as recited in claim 1 or 2, wherein said bifurcation area (BA) is at least partially within a bifurcation (92).

4. The system as recited in any preceding claim, wherein said at least one heat exchanger (HX₁, HX₂) is mounted at least partially within, or forward of, a pylon structure (12).

5. The system as recited in any preceding claim, wherein said at least one heat exchanger (HX₁, HX₂) is mounted at least partially within an upper bifurcation (92).

6. The system as recited in any preceding claim, further comprising an inlet guide vane structure having a central guide vane (100).

7. The system as recited in any preceding claim, wherein said first heat exchanger (HX₁) and said second heat exchanger (HX₂) communicate through a respective first and second exit (96A, 96B).

8. The system as recited in claim 7, wherein at least one of said exits (96A, 96B) includes a set of movable flow vanes (104) to modulate an exit airflow.

9. The system of any preceding claim, wherein none of the heat exchangers is in a series flow relationship with other(s) of the heat exchangers.

10. A nacelle assembly (N) for a gas turbine engine (10) comprising:
a core nacelle (C) defined about an axis;
a fan nacelle (F) mounted at least partially around said core nacelle (C), a bypass flow (B) communicated between said core nacelle (C) and said fan nacelle (F);
and a thermal management system as claimed in claim 1, wherein at least one heat exchanger (HX₁, HX₂) is mounted within the bifurcation area (BA; BA') adjacent a pylon structure (12) such that a plane which includes the pylon structure (12) and the axis passes through the bifurcation area (BA) such that said at least one heat exchanger (HX₁, HX₂) is in communication with said bypass flow (B).

11. The assembly as recited in claim 10, wherein said at least one heat exchanger (HX₁, HX₂) is at least partially recessed into said core nacelle (C), and/or wherein said bifurcation area (BA) defines an inlet (94) which extends in a radial direction between said core nacelle (C) and said fan nacelle (F).

12. A method of thermal management for a gas turbine engine comprising:
communicating a bypass flow (B) into at least one heat exchanger (HX₁, HX₂) mounted within a bifurcation area, and optionally communicating an airflow which exits the at least one heat exchanger (HX₁, HX₂) adjacent a pylon structure (12) and an aircraft wing;
**characterized in that** said at least one heat exchanger comprises a first heat exchanger (HX₁) and a second heat exchanger (HX₂), mounted within a common plenum defined by said bifurcation area (BA) to share a common inlet (94).

## Patentansprüche

1. Thermisches Handhabungssystem (90; 90') für eine Gasturbinenmaschine (10) umfassend:
einen Verzweigungsbereich (BA); und
zumindest einen Wärmetauscher (HX₁, HX₂), der innerhalb des Verzweigungsbereichs (BA) in Verbindung mit einem Bypassstrom (B) von der Gasturbinenmaschine angebracht ist;
**dadurch gekennzeichnet, dass** der zumindest eine Wärmetauscher einen ersten Wärmetauscher (HX₁) und einen zweiten Wärmetauscher (HX₂) umfasst, die innerhalb eines gemeinsamen Plenums angebracht sind, das durch den Verzweigungsbereich (BA) definiert ist, um sich einen gemeinsamen Einlass (94) zu teilen.

2. System nach Anspruch 1, wobei der Verzweigungsbereich (BA) zumindest teilweise innerhalb oder vor einer Pylonstruktur (12) angeordnet ist.

3. System nach Anspruch 1 oder 2, wobei der Verzweigungsbereich (BA) zumindest teilweise innerhalb einer Verzweigung (92) ist.

4. System nach einem der vorangehenden Ansprüche, wobei der zumindest eine Wärmetauscher (HX₁, HX₂) zumindest teilweise innerhalb oder vor einer Pylonstruktur (12) angebracht ist.

5. System nach einem der vorangehenden Ansprüche, wobei der zumindest eine Wärmetauscher (HX₁, HX₂) zumindest teilweise innerhalb einer oberen Verzweigung (92) angebracht ist.

6. System nach einem der vorangehenden Ansprüche, des Weiteren umfassend eine Einlassleitschaufelstruktur, die eine zentrale Leitschaufel (100) aufweist.

7. System nach einem der vorangehenden Ansprüche, wobei der erste Wärmetauscher (HX₁) und der zweite Wärmetauscher (HX₂) durch einen jeweiligen ersten und einen zweiten Ausgang (96A, 96B) kommunizieren.

8. System nach Anspruch 7, wobei zumindest einer der Ausgänge (96A, 96B) einen Satz von bewegbaren Strömungsleitschaufeln (104) beinhaltet, um einen Ausgangsluftstrom zu modulieren.

9. System nach einem der vorangehenden Ansprüche, wobei keiner der Wärmetauscher in einer seriellen Strömungsbeziehung mit einem anderen oder anderen der Wärmetauscher steht.

10. Gondelanordnung (N) für eine Gasturbinenmaschine (10) umfassend:
eine Kerngondel (C), die um eine Achse definiert ist;
eine Bläsergondel (F), die zumindest teilweise um die Kerngondel (C) angebracht ist, wobei ein Bypassstrom (B) zwischen der Kerngondel (C) und der Bläsergondel (F) kommuniziert wird; und
ein thermisches Handhabungssystem nach Anspruch 1, wobei zumindest ein Wärmetauscher (HX₁, HX₂) innerhalb des Verzweigungsbereichs (BA; BA') benachbart einer Pylonstruktur (12) angebracht ist, so dass eine Ebene, die die Pylonstruktur (12) und die Achse beinhaltet durch den Verzweigungsbereich (BA) passiert, so dass der zumindest eine Wärmetauscher (HX₁, HX₂) in Kommunikation mit dem Bypassstrom (B) ist.

11. Anordnung nach Anspruch 10, wobei der zumindest eine Wärmetauscher (HX₁, HX₂) zumindest teilweise in die Kerngondel (C) zurückgesetzt ist, und/oder wobei der Verzweigungsbereich (BA) einen Einlass (94) definiert, der sich in eine radiale Richtung zwischen der Kerngondel (C) und der Bläsergondel (F) erstreckt.

12. Verfahren zur thermischen Handhabung für eine Gasturbinenmaschine umfassend:
Kommunizieren eines Bypassstroms (B) in zumindest einen Wärmetauscher (HX₁, HX₂), der innerhalb eines Verzweigungsbereichs angebracht ist, und
optionales Kommunizieren eines Luftstroms, der aus dem zumindest einen Wärmetauscher (HX₁, HX₂) benachbart einer Pylonstruktur (12) und eines Flugzeugflügels austritt;
**dadurch gekennzeichnet, dass** der zumindest eine Wärmetauscher einen ersten Wärmetauscher (HX₁) und einen zweiten Wärmetauscher (HX₂) umfasst, die innerhalb eines gemeinsamen Plenums angebracht sind, das durch den Verzweigungsbereich (BA) definiert ist, um sich einen gemeinsamen Einlass (94) zu teilen.

## Revendications

1. Système de gestion thermique (90 ; 90') pour un moteur à turbine à gaz (10) comprenant :
une zone de bifurcation (BA) ; et
au moins un échangeur de chaleur (HX₁, HX₂) monté à l'intérieur de ladite zone de bifurcation (BA) en communication avec un flux de dérivation (B) depuis le moteur à turbine à gaz ;
**caractérisé en ce que** ledit au moins un échangeur de chaleur comprend un premier échangeur de chaleur (HX₁) et un second échangeur de chaleur (HX₂), monté à l'intérieur d'un plénum commun défini par ladite zone de bifurcation (BA) pour partager une admission commune (94).

2. Système selon la revendication 1, dans lequel ladite zone de bifurcation (BA) est au moins partiellement à l'intérieur, ou en avant, d'une structure de mât (12).

3. Système selon la revendication 1 ou 2, dans lequel ladite zone de bifurcation (BA) est au moins partiellement à l'intérieur d'une bifurcation (92).

4. Système selon l'une quelconque des revendications précédentes, dans lequel ledit au moins un échangeur de chaleur (HX₁, HX₂) est monté au moins partiellement à l'intérieur, ou en avant, d'une structure de mât (12).

5. Système selon l'une quelconque des revendications précédentes, dans lequel ledit au moins un échangeur de chaleur (HX₁, HX₂) est monté au moins partiellement à l'intérieur d'une bifurcation supérieure (92).

6. Système selon l'une quelconque des revendications précédentes, comprenant en outre une structure d'aube de guidage d'admission ayant une aube de guidage centrale (100).

7. Système selon l'une quelconque des revendications précédentes, dans lequel ledit premier échangeur de chaleur (HX₁) et ledit second échangeur de chaleur (HX₂) communiquent via des première et seconde sorties respectives (96A, 96B).

8. Système selon la revendication 7, dans lequel au moins une desdites admissions (96A, 96B) comprend un ensemble d'aubes d'écoulement (104) pour moduler un écoulement d'air de sortie.

9. Système selon l'une quelconque des revendications précédentes, dans lequel aucun des échangeurs de chaleur n'est en relation d'écoulement en série avec un ou plusieurs autres des échangeurs de chaleur.

10. Ensemble de nacelle (N) pour un moteur à turbine à gaz (10) comprenant :
une nacelle de coeur (C) définie autour d'un axe ;
une nacelle de soufflante (F) montée au moins partiellement autour de ladite nacelle de coeur (C), un flux de dérivation (B) mis en communication entre ladite nacelle de coeur (C) et ladite nacelle de soufflante (F) ;
et un système de gestion thermique selon la revendication 1, dans lequel au moins un échangeur de chaleur (HX₁, HX₂) est monté à l'intérieur de la zone de bifurcation (BA ; BA') adjacent à une structure de mât (12) de sorte qu'un plan qui comprend la structure de mât (12) et l'axe passe à travers la zone de bifurcation (BA) de telle sorte qu'au moins un échangeur de chaleur (HX₁, HX₂) est en communication avec ledit flux de dérivation (B).

11. Ensemble selon la revendication 10, dans lequel ledit au moins un échangeur de chaleur (HX₁, HX₂) est au moins partiellement encastré dans ladite nacelle de coeur (C), et/ou dans lequel ladite zone de bifurcation (BA) définit une admission (94) qui s'étend dans une direction radiale entre ladite nacelle de coeur (C) et ladite nacelle de soufflante (F).

12. Procédé de gestion thermique pour un moteur à turbine à gaz comprenant les étapes consistant à :
communiquer un flux de dérivation (B) dans au moins un échangeur de chaleur (HX₁, HX₂) monté à l'intérieur d'une zone de bifurcation, et facultativement faire communiquer un flux d'air qui sort du au moins un échangeur de chaleur (HX₁, HX₂) adjacent à une structure de mât (12) et à une aile d'aéronef ;
**caractérisé en ce que** ledit au moins un échangeur de chaleur comprend un premier échangeur de chaleur (HX₁) et un second échangeur de chaleur (HX₂), monté à l'intérieur d'un plénum commun défini par ladite zone de bifurcation (BA) pour partager une admission commune (94).
